# EUROPEAN PATENT APPLICATION

(11) **EP 2 424 040 A1**
(43) Date of publication of application: **29.02.2012**
(21) Application number: 10851298.9
(22) Date of filing: 16.11.2010
(51) Int. Cl.: H01Q 3/02, H04W 88/12

(54) **METHOD AND SYSTEM FOR ON-LINE ADJUSTING ANGLE OF BASE STATION ANTENNA**

(71) Applicant: Huawei Technologies Co., Ltd., Shenzhen, Guangdong 518129 (CN)
(72) Inventor: PEI, Shubao, Shenzhen Guangdong 518129 (CN); XIE, Shoubo, Shenzhen Guangdong 518129 (CN); XIAO, Weihong, Shenzhen Guangdong 518129 (CN); ZHOU, Xianhua, Shenzhen Guangdong 518129 (CN)
(74) Representative: Thun, Clemens
(86) International application number: PCT/CN2010/078780
(87) International publication number: WO 2011/140794

(57) **Abstract**

An online adjusting method and system for an angle of a base station antenna are provided in the embodiments of the present invention. The system includes a measuring unit, a processing unit, and an adjusting unit. The measuring unit is disposed on the base station antenna, and configured to measure the angle of the base station antenna to obtain angle information, and transmit the angle information to the processing unit through a first communication interface. The processing unit is disposed in a base station control system, and configured to compare the angle information measured by the measuring unit with saved angle information to generate angle adjustment data, and transmit the angle adjustment data to the adjusting unit through a second communication interface. The adjustment unit is disposed on the base station antenna, and configured to adjust the angle of the base station antenna according to the angle adjustment data generated by the processing unit. Through the method and system provided in the embodiments of the present invention, the measurement and adjustment manners of the azimuth angle and the pitching angle of the base station antenna are changed, which greatly enhances the security and efficiency of the measurement of the angle of the base station antenna.

## Description

### FIELD OF THE INVENTION

The present invention relates to the field of mobile communications, and in particular, to an online adjusting method and system for an angle of a base station antenna.

### BACKGROUND OF THE INVENTION

Currently, when expected coverage of a new network needs to be implemented upon the opening of a site of a newly built mobile communication base station, or an existing network needs to be optimized in a site of an existing mobile communication base station, the degrees of an azimuth angle and a pitching angle of a base station antenna are important basic data in the network. The change of the azimuth angle and the pitching angle of the base station antenna may greatly affect the quality of a signal, so the measurement and adjustment of the angles of the base station antenna become especially important.

In practical engineering, in order to adjust the azimuth angle and the pitching angle of the mobile communication base station antenna, the azimuth angle and the pitching angle must be measured first. Currently, a measurement manner is to measure manually the angles with a compass (north stabilized indicator) and a grading instrument to obtain data, and perform corresponding adjustment on the angles according to the measurement result. However, this manual operation method is difficult and has low measurement accuracy. For example, to measure the azimuth angle, one needs to stand at the back side of the antenna and align with the antenna while holding the compass, and keeping the dial of the compass in parallel with the horizontal plane, and can read the azimuth angle only when the center fine line of the reflector of the compass overlaps with both the horizontal projection line of the antenna and the geometric center line at the back side of the antenna; or one needs to stand at the front side of the antenna while holding the compass, align the reflector of the compass with the vertical projection line of the center line at the front side of the antenna, and read the azimuth angle when the vertical projection line overlaps with the center line of the reflector of the compass. Further, to measure the tilt angle, the gradiometer is first attached to the back side of the antenna, and the down-tilt angle is read when the bubble stays at the center; or the tilt angle of the antenna is read from the dial of the antenna mount. After the angle is read, the angle is manually adjusted, and the angle needs to be repeatedly read during the adjustment, which shows that the adjustment manner is rather inconvenient.

### SUMMARY OF THE INVENTION

Embodiments of the present invention provide an online adjusting method and system for an angle of a base station antenna, so as to enhance the security and efficiency of the measurement of the angle of the base station antenna and the flexibility of the adjustment of the angle of the antenna.

The foregoing objectives of the present invention are achieved by the following technical solutions.

An online adjusting system for angles of a base station antenna is provided, where the online adjusting system includes a measuring unit, a processing unit, and an adjusting unit.

The measuring unit is disposed on the base station antenna, and configured to measure the angle of the base station antenna to obtain angle information, and transmit the angle information to the processing unit through a first communication interface.

The processing unit is disposed in a base station control system, and configured to compare the angle information measured by the measuring unit with saved angle information to generate angle adjustment data, and transmit the angle adjustment data to the adjusting unit through a second communication interface.

The adjustment unit is disposed on the base station antenna, and configured to adjust the angle of the base station antenna according to the angle adjustment data generated by the processing unit.

An online adjusting method for angles of a base station antenna is provided, where the method includes:
obtaining angle information of the base station antenna through a first communication interface, in which the angle information of the base station antenna is measured by an angle sensor disposed on the base station antenna;
comparing the obtained angle information of the base station antenna with saved angle information, so as to generate angle adjustment parameters; and
transferring the angle adjustment parameters to an adjuster disposed in a base station control system through a second communication interface, so that the adjuster adjusts the angles of the base station antenna according to the angle adjustment parameters.

By using the method and system provided in the embodiments of the present invention, the measurement and adjustment manners of the angle of the base station antenna are changed, and climbing onto the tower for angle measurement and adjustment is not necessary, which greatly enhances the security and efficiency of the measurement of the angle of the base station antenna.

### BRIEF DESCRIPTION OF THE DRAWINGS

The accompanying drawings illustrated here are used to provide a further understanding of the present invention, and constitute a part of this application. In the accompanying drawings:
FIG. 1 is a block diagram showing the constitution of a system according to an embodiment of the present invention;
FIG. 2 is a schematic diagram showing the disposition of an angle sensor on a base station antenna;
FIG. 3 is a block diagram showing the constitution of a system according to another embodiment of the present invention;
FIG. 4 is a flow chart of a method according to an embodiment of the present invention;
FIG. 5 is a schematic diagram showing a transmission path of a data stream during an automatic adjustment process of an antenna; and
FIG. 6 is a flow chart showing the automatic adjustment of the antenna.

### DETAILED DESCRIPTION OF THE EMBODIMENTS

In order to make the obj ectives, technical solutions, and advantages of the present invention more comprehensible, the present invention is further described in detail below with reference to embodiments and the accompanying drawings. Here, the exemplary embodiments of the present invention and the illustrations thereof are used to explain the present invention, rather than to limit the present invention.

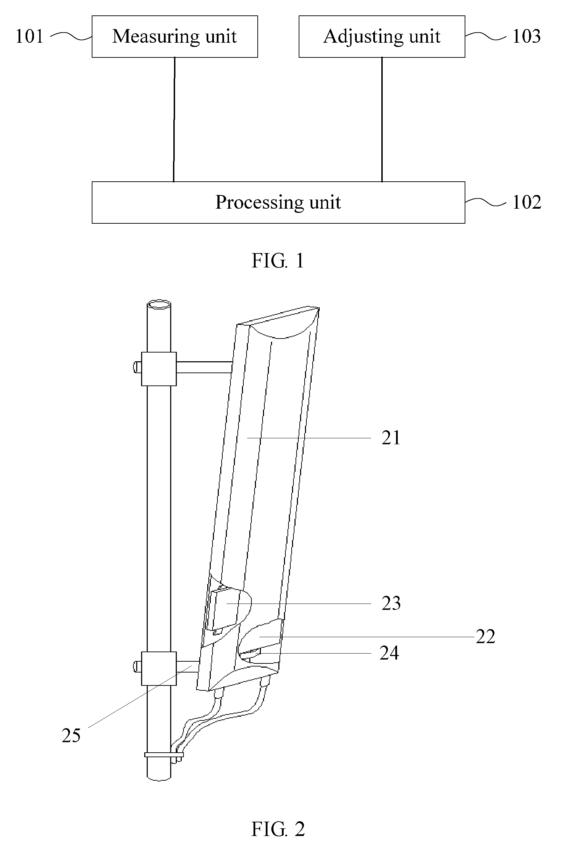

FIG. 1 is a block diagram showing the constitution of an online adjusting system for angles of a base station antenna according to an embodiment of the present invention. Referring to FIG. 1, the system mainly includes a measuring unit 101, a processing unit 102, and an adjusting unit 103.

The measuring unit 101 is disposed on the base station antenna, and configured to measure the angle of the base station antenna to obtain angle information, and transmit the angle information to the processing unit 102 through a first communication interface.

The angle information of the base station antenna includes an azimuth angle and/or a pitching angle. The azimuth angle here refers to an angle formed between the transmission direction of main beam of the antenna and the positive north pole of the earth magnetic field on the horizontal plane. The pitching angle refers to an angle of the main beam of the antenna relative to the horizontal plane.

The measuring unit 101 may be an angle sensor, for example, a MEMS (Micro Electro Mechanical Systems, micro electro mechanical systems) device or a magnetoresistive device, and this embodiment is not limited thereto.

The angle sensor functioning as the measuring unit 101 may be disposed on the base station antenna in an inside or outside disposition manner. If the inside disposition and integration manner is used, as shown in FIG. 2, the angle sensor 23 may be fixed on a reflecting plate 22 in an antenna cover 21 of the base station antenna, an adjuster 24 functioning as the adjusting unit 103 is fixedly connected to a mounting kit 25 of the base station antenna, and the reflecting plate 22 is enabled to rotate in the horizontal plane, which facilitates the adjustment of the angle of the antenna by the adjuster 24 functioning as the adjusting unit 103 disposed on the base station antenna. If the outside disposition manner is used, the angle sensor may be made into an expansible kit that can be independently fixed, and be integrated with the adjuster functioning as the adjusting unit 103.

After measuring the azimuth angle and/or the pitching angle of the base station, the measuring unit 101 uploads the azimuth angle and/or the pitching angle to the processing unit 102 through the first communication interface.

The processing unit 102 is disposed in a base station control system, and configured to compare the angle information measured by the measuring unit 101 with saved angle information, generate angle adjustment data when a difference between the measured angle information and the saved angle information exceeds a preset threshold, and transmit the angle adjustment data to the adjusting unit through a second communication interface.

The specific comparison method may be selected according to the actual situation. For example, a simple method is to compare the measured value with the saved value, and generate the angle adjustment data if the difference between the two values exceeds a preset range. Definitely, the comparison may also be implemented by a division method, or by a method that the measured value is taken into some operations, like being added or multiplied with a coefficient, and then subtracted or divided by the saved value.

The processing unit 102 may obtain the saved angle information from a network planning database of the base station control system. The angle information is generally an angle of an antenna, where the angle needs to be set upon the requirement of the base station control system, and includes an azimuth angle and/or a pitching angle. Therefore, when the processing unit 102 compares the azimuth angle and/or pitching angle with the azimuth angle and/or the pitching angle measured by the measuring unit 101, and finds that a difference between the saved angle information and the difference exceeds a threshold, it is indicated that the angle of the base station antenna needs to be adjusted, and the angle adjustment data is generated.

The base station control system may be integrated in a network management platform of a BTS (Base Transceiver Station, base transceiver station), or may be disposed as an independent module in any computer, and this embodiment is not limited thereto.

The adjustment unit 103 is disposed on the base station antenna, and configured to adjust the angle of the base station antenna according to the angle adjustment data generated by the processing unit 102.

The adjusting unit may be an independent module, or may be integrated into a RCU (Remote Control Unit, remote control unit), RAS (Remote Azimuth Steering, remote azimuth steering), or a TMA (Tower Mount Amplifier, tower mount amplifier), and this embodiment is not limited thereto.

The same as the measuring unit 101, the adjusting unit 103 is also disposed on the base station antenna. As described above, referring to FIG. 2, the adjusting unit 103, just the same as the measuring unit 101, may be disposed inside and integrated with the base station antenna and fixedly connected to the mounting kit 25 of the antenna. Since the reflecting plate 22 of the antenna is enabled to rotate in the horizontal plane, the angle of the antenna may be adjusted through the adjusting unit 103 disposed inside when the angle of the antenna needs to be adjusted. The adjusting unit 103 may also be integrated with the measuring unit 101 and function as an expansible kit of the base station that can be independently fixed.

In this embodiment, the types of the first communication interface and the second communication interface are not limited. For example, the two interfaces may be standard interfaces over the AISG (Antenna Interface Standards Group, Antenna Interface Standards Group) protocol, or other auxiliary signal line interfaces, or wireless interfaces. Meanwhile, the types of the two communication interfaces may be the same or different. For example, the first communication interface is an optical fiber interface for raising the transmission rate, and the second communication interface is a coaxial cable interface. When the types of the two communication interfaces are the same, the two communication interfaces may use the same hardware interface equipment, or use different hardware interface equipments respectively. For example, the two communication interfaces may share one optical fiber or use different optical fibers respectively. In order to save the cost and facilitate the management, in the embodiment of the present invention, the two communication interfaces are of the same type, and use the same hardware interface equipment.

When an AISG interface is used, the angle information measured by the measuring unit 101 may be transmitted to the base station control system through a feeder. The use of the AISG interface has the following advantages: firstly, the data measurement and signal control are both accomplished in the physical connection between the antenna and the base station equipment, so the transmission path is optimal; secondly, in addition to the existing base station channel, a new angle data pipe is built, so that since the data processing is separated from the service channel of the base station, channel resources of the base station do not need to be used in the process of measurement operation and data uploading, which saves the limited wireless channel resources in the base station; and thirdly, the operator does not need to climb high to perform operations on the antenna, so that the security is good and the measurement efficiency is high. The use of other auxiliary signal line interfaces, such as an optical fiber interface, may extend the distance of the transmission line. The use of other wireless interfaces may achieve data communication without the restriction of a cable.

Through the system provided in the embodiment of the present invention, the measurement and adjustment manners of the azimuth angle and the pitching angle of the base station antenna are changed, which greatly enhances the security and efficiency of the measurement of the angle of the base station antenna.

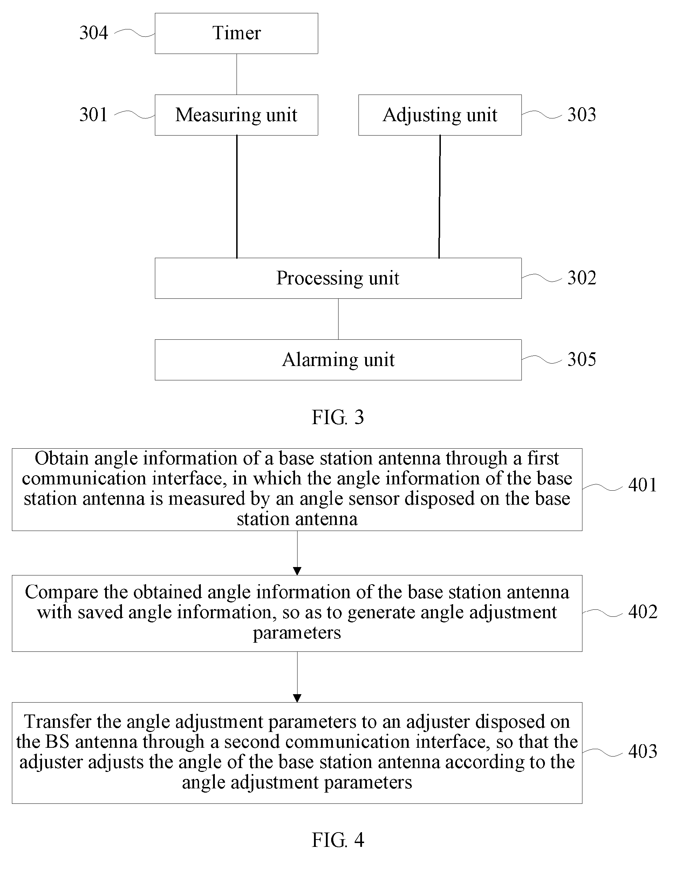

FIG. 3 is a block diagram showing the constitution of an online adjusting system for an angle of a base station antenna according to an embodiment of the present invention. Referring to FIG. 3, the system mainly includes a measuring unit 301, a processing unit 302, and an adjusting unit 303. The constitution and functions of the components of the system are the same as those in the embodiment in FIG. 1, so the details are not repeated herein.

In an embodiment, the system further includes:
a timer 304, disposed in the base station control system, and configured to generate a set time, and generate and send driving data to the measuring unit 301 when the set time arrives, so that the measuring unit 301 starts measuring the angles of the antenna after receiving the driving data.

In an embodiment, a button may be disposed on the timer 304, and when the button is pressed, an azimuth angle and a pitching angle are provided for implementing dynamic adjustment of the angles of the base station antenna, which achieves real-time remote network optimization, and greatly accelerates the response speed of the network adjustment or network optimization.

In another embodiment, the processing unit 302 is further configured to generate alarm data when a difference of the azimuth angle and/or the pitching angle exceeds a preset threshold. In this case, the system further includes:
an alarming unit 305, disposed in the base station control system and configured to perform alarm prompt according to the alarm data generated by the processing unit 302.

The alarming unit 305 may be an audible alarming module, which emits a set alarm tone according to the alarm data; and the alarming unit 305 may also be a visual alarming module, which emits set light according to the alarm data. Alternatively, the alarming unit 305 may emit sound and light at the same time for alarming. Alternatively, the alarming unit 305 may be a graphic alarming module, which uses graphics for alarming according to the alarm data. The above descriptions are merely examples, and this embodiment is not limited thereto.

Through the alarming unit 305, the maintenance personnel are informed about the change of the angles of the antenna in time, which facilitates network optimization.

In this embodiment, the same as the processing unit 302, the timer 304 and the alarming unit 305 may also be disposed in the base station control system, the measuring unit 301 and the adjusting unit 303 are integrated on the base station antenna, and the base station antenna and the base station control system are connected through the first communication interface and the second communication interface.

According to the system of this embodiment, when the angles of the base station antenna deviate, the operator does not need to climb onto the tower, but adjusts the azimuth angle and the pitching angle online to maintain the position of the antenna in the air, which is easy to operate. Besides, parameters of the angles (the azimuth angle and the pitching angle) of the antenna are all introduced into the base station control system, and reported to the Network Management Center (NMC), so as to implement automatic measurement and real-time monitoring of the status of the angles of the antenna.

FIG. 4 is a flow chart of an online adjusting method for an angle of a base station antenna according to an embodiment of the present invention. Referring to FIG. 4, the method includes:
Step 401: Obtain angle information of the base station antenna through a first communication interface, in which the angle information of the base station antenna is measured by an angle sensor disposed on the base station antenna.
Step 402: Compare the obtained angle information of the base station antenna with saved angle information, so as to generate angle adjustment parameters.
Step 403: Transfer the angle adjustment parameters to an adjuster disposed on the base station antenna through a second communication interface, so that the adjuster adjusts the angle of the base station antenna according to the angle adjustment parameters.

The angle information obtained in step 401 includes an azimuth angle and/or a pitching angle of the base station antenna.

The comparing the obtained angle information of the base station antenna with the saved angle information, so as to generate the angle adjustment parameters in step 402 may be implemented by using the following method:
comparing the obtained angle information of the base station antenna with the saved angle information, and generating angle adjustment data when a difference between the measured angle information and the saved angle information exceeds a preset threshold.

For the types of the first communication interface and the second communication interface, reference may be made to the specific description in the above system embodiment, and the details are not be repeated herein.

To make the method according to the embodiment shown in FIG. 4 more comprehensible, a schematic diagram showing a transmission path of a data stream during an automatic adjustment process of an antenna and a flow chart showing the automatic adjustment of the antenna are given below for detailed illustration of the system according to this embodiment.

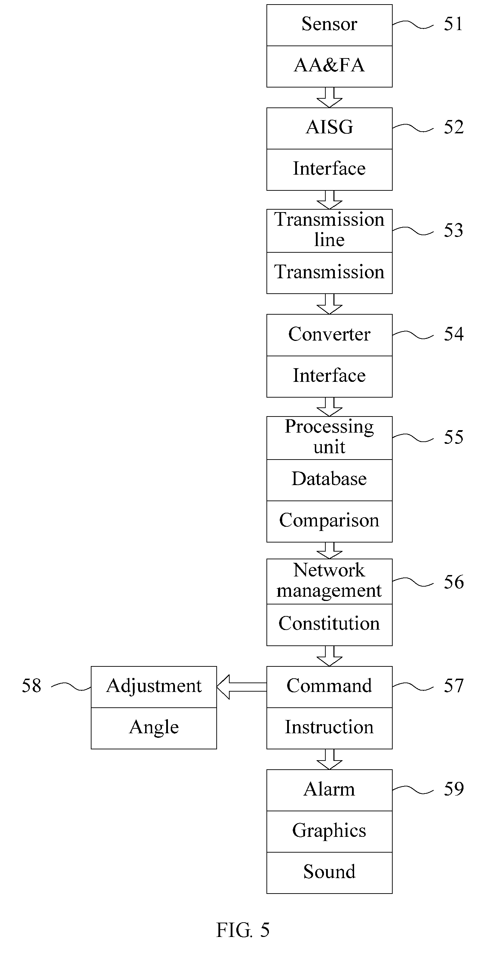

FIG. 5 is a schematic diagram showing a transmission path of a data stream during an automatic adjustment process of an antenna. In this embodiment, a first communication interface and a second communication interface are both implemented by AISG interfaces 52. Referring to FIG. 5, the process includes the following. An angle sensor 51 measures an angle of the antenna to generate angle data. The angle data is transmitted through the AISG interface 52 and a transmission line 53. A converter 54 in a base station control system converts the angle data into an identifiable signal. An angle processing unit 55 in the base station control system compares the received angle data with angle data saved in a database. A network management module 56 in the base station control system combines and analyzes the data processed by the angle processing unit 55 to generate corresponding commands. The commands 57 are transferred to an adjusting unit 58 to drive the adjusting unit 58 to change the direction of the beams of the antenna; and meanwhile transferred to an alarming unit 59 for performing an audible and visual alarm.

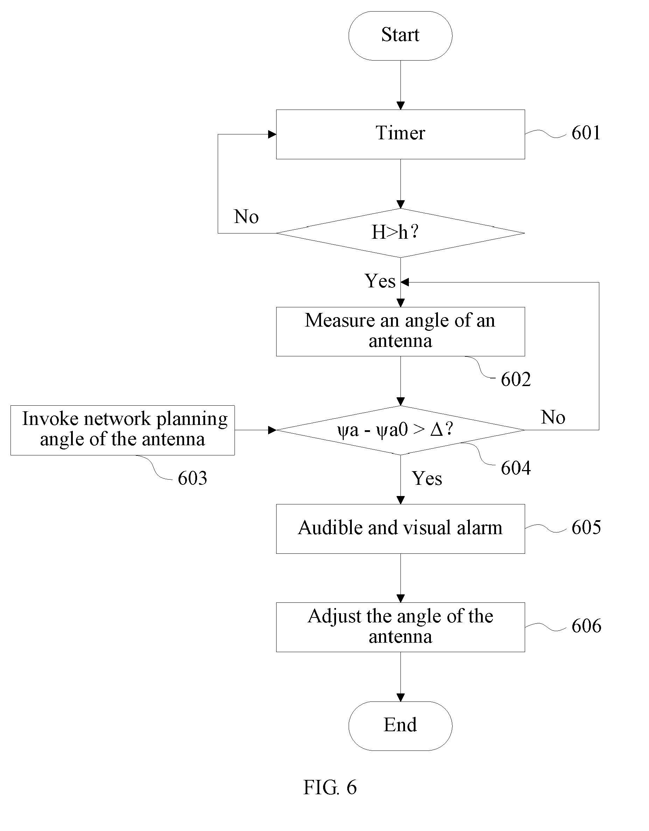

FIG. 6 is a specific flow chart showing the automatic adjustment of the antenna. Referring to FIG. 6, the process includes:
Step 601: Power on an angle sensor, initialize a system, and start a timer.
Step 602: Measure the azimuth angle (ψ) and the pitching angle (β) of the antenna.
   2N (N=the number of the antennas) pieces of angle data are uploaded to the angle processing unit in the base station control system through the AISG protocol.
Step 603: An Angle Process Unit (APU) of the system reads azimuth angles (ψa0, ψb0, ψc0) and pitching angles (βa0, βb0, βc0) of antennas A, B, and C in three sectors for reference from a network planning database of a base station.
Step 604: Taking the antenna A for example, calculate an angle deviation (ψa-ψa0) of the antenna A, and judge a difference between the angle deviation and a threshold (Δ), that is, whether ψa-ψa0>Δ.
Step 605: If the foregoing inequality is satisfied, trigger an audible and visual alarming software module to display on a network management platform terminal of the base station that the angles of the antenna A are abnormal, and emit a set alarm tone; and meanwhile generate a driving instruction packet.
Step 606: Convert the driving instruction packet by the converter into a signal over the AISG protocol, generate a required control amount on a 485 interface board, and drive the adjuster of the antenna to operate, so as to adjust the value of "-(ψa-ψa0)" to eliminate the deviation and recover the set position of the antenna in the air.

The implementing sequence of step 605 and step 606 is not limited in this embodiment. That is, step 606 may be implemented before step 605.

The embodiment in FIG. 6 embodies the real-time adjustment, and the timer may also be added for control to perform dynamic adjustment, so that real-time remote network optimization is achieved and the response speed to the network optimization is accelerated.

Through the method according to the embodiment of the present invention, the measurement and adjustment manners of the azimuth angle and the pitching angle of the base station antenna are changed, which greatly enhances the security and efficiency of the measurement of the angles of the base station antenna. Moreover, the azimuth angle and the pitching angle of the beam of the antenna may be automatically adjusted online without interruption of the service of the base station.

In combination with the embodiments herein, described steps of the method or algorithm may be directly implemented by using hardware, a software module executed by a processor, or the combination of the both. The software module may be placed in a random access memory (RAM), a memory, a read-only memory (ROM), an electrically programmable ROM, an electrically erasable programmable ROM, a register, a hard disk, a removable magnetic disk, a CD-ROM, or any storage medium of other forms well-known in the technical field.

The objectives, technical solutions, and beneficial effects of the present invention have been illustrated in further detail through the above specific embodiments. It should be understood that the above descriptions are merely specific embodiments of the present invention, but not intended to limit the present invention. Any modification, equivalent replacement, or improvement made without departing from the spirit and principle of the present invention shall fall within the scope of the present invention.

## Claims

1. An online adjusting system for an angle of a base station antenna, wherein the online adjusting system comprises a measuring unit, a processing unit, and an adjusting unit, wherein:
the measuring unit is disposed on the base station antenna, and configured to measure the angle of the base station antenna to obtain angle information, and transmit the angle information to the processing unit through a first communication interface;
the processing unit is disposed in a base station control system, and configured to compare the angle information measured by the measuring unit with saved angle information to generate angle adjustment data, and transmit the angle adjustment data to the adjusting unit through a second communication interface; and
the adjustment unit is disposed on the base station antenna, and configured to adjust the angle of the base station antenna according to the angle adjustment data generated by the processing unit.

2. The online adjusting system for an angle of a base station antenna according to claim 1, wherein the online adjusting system further comprises:
a timer, disposed in the base station control system, and configured to generate a set time, and generate and send driving data to the measuring unit when the set time arrives, so that the measuring unit starts measuring the angles of the base station antenna after receiving the driving data and.

3. The online adjusting system for an angle of a base station antenna according to claim 1, wherein
the angle information obtained by the measuring unit comprises an azimuth angle and/or a pitching angle.

4. The online adjusting system for an angle of a base station antenna according to claim 1, wherein
the processing unit is specifically configured to compare the angle information obtained by the measuring unit with the saved angle information, and generate the angle adjustment data when a difference between the measured angle information and the saved angle information exceeds a preset threshold.

5. The online adjusting system for an angle of a base station antenna according to claim 4, wherein the processing unit is further configured to:
generate alarm data when the difference between the measured angle information and the saved angle information exceeds the preset threshold; and
the online adjusting system further comprises:
an alarming unit, disposed in the base station control system and configured to perform alarm prompt according to the alarm data generated by the processing unit.

6. The online adjusting system for an angle of a base station antenna according to claim 1, wherein the measuring unit is an angle sensor, wherein the angle sensor comprises a micro electro mechanical systems, MEMS, device, or a magnetoresistive device.

7. The online adjusting system for an angle of a base station antenna according to claim 1, wherein the adjusting unit is an independent module, or integrated into a remote control unit, RCU, remote azimuth steering, RAS, or a tower mount amplifier, TMA.

8. The online adjusting system for an angle of a base station antenna according to claim 1, wherein the types of the first communication interface and the second communication interface are wired interfaces or wireless interfaces, and the types of the wired interfaces comprise interfaces over the Antenna Interface Standards Group, AISG, protocol, and optical fiber interfaces.

9. An online adjusting method for an angle of a base station antenna, comprising:
obtaining angle information of the base station antenna through a first communication interface, wherein the angle information of the base station antenna is measured by an angle sensor disposed on the base station antenna;
comparing the obtained angle information of the base station antenna with saved angle information, so as to generate angle adjustment parameters; and
transferring the angle adjustment parameters to an adjuster disposed on the base station antenna through a second communication interface, so that the adjuster adjusts the angle of the base station antenna according to the angle adjustment parameters.

10. The method according to claim 9, wherein
the angle information comprises an azimuth angle and/or a pitching angle.

11. The method according to claim 9, wherein
the comparing the obtained angle information of the base station antenna with the saved angle information, so as to generate the angle adjustment parameters comprises:
comparing the obtained angle information of the base station antenna with the saved angle information, and generating angle adjustment data when a difference between the measured angle information and the saved angle information exceeds a preset threshold.

12. The method according to claim 9, wherein
the types of the first communication interface and the second communication interface are wired interfaces or wireless interfaces, and the types of the wired interfaces comprise interfaces over the Antenna Interface Standards Group, AISG, protocol, and optical fiber interfaces.
